# EUROPEAN PATENT APPLICATION

(11) **EP 4 760 659 A1**
(43) Date of publication of application: **17.06.2026**
(21) Application number: 25221153.7
(22) Date of filing: 05.12.2025
(51) Int. Cl.: G06V 30/412, G06V 30/416, G06V 30/42

(54) **A COMPUTER-IMPLEMENTED METHOD FOR IDENTIFYING PATTERN DEVIATIONS IN REGULATORY DOCUMENTS COMPLIANT WITH FINANCIAL REGULATIONS**

(30) Priority: 13.12.2024 SE 2451283
(71) Applicant: The Intelligence Company AB (publ), 824 21 Hudiksvall (SE)
(72) Inventor: NYLANDER, Jens, 824 56 Hudiksvall (SE)
(74) Representative: Zacco Sweden AB

(57) **Abstract**

The disclosure relates to a computer-implemented method (10) for identifying pattern deviations in regulatory documents (100) compliant with financial regulations. The method comprises receiving (s101) a regulatory document (100) and analysing (s102) it by grouping (s1021) and sorting (s1022) information into categories (203), including numerical data and associated footnotes.

The analysing process (201) links a numerical amount to a corresponding amount or calculation in its associated footnote to verify data integrity. A specific regulatory document material (101) is then compared (s106) against a predefined regulatory document material (300) using a pattern analysis (204).

Deviations, particularly inconsistencies in said data integrity associations between the amount and the footnote calculation, are extracted (s107). These extracted deviations indicate a probability of falsification of the regulatory document (100).

## Description

### Technical field

The present disclosure relates to a computer-implemented method for identifying pattern deviations in regulatory documents compliant with financial regulations. More specifically, the disclosure relates to a computer-implemented method for identifying pattern deviations in regulatory documents compliant with financial regulations as defined in the introductory parts of the independent claims.

### Background art

Regulatory documents, such as annual reports, quarterly reports, and financial disclosures, are critical in ensuring transparency and accountability within the financial sector. These documents are legally required by regulatory bodies and provide detailed insights into a company's financial health, performance, and compliance with various regulations. Typically, large information companies have relied on outsourcing the digitisation of these documents to low-cost data entry firms. These firms manually input financial data from the documents into standardised models based on the report's structure, whether it is organised by function or cost type. The digitised information is then used by online services to monitor key financial figures that offer users insights into business operations and industry trends.

A current solution used today is to digitise these regulatory documents by using Optical Character Recognition (OCR) technology. OCR technology can digitise text found in images within reports. However, the financial data contained in regulatory documents is often presented in highly variable formats, especially when it comes to tables and foot notes. Financial tables in reports are frequently devoid of clear lines and follow inconsistent layouts, making them difficult for OCR-based systems to process accurately. OCR Table Recognition, which aims to automatically read and digitise tables, has been unreliable when applied to regulatory documents. The same problem occurs with foot notes, where there is a difficulty to pair the footnote with its corresponding text in the assigned document. As a result, despite advancements in OCR technology, this task has continued to be performed manually by specialised information companies for decades.

This manual process can sometimes lead to unintended consequences. Over time, companies, accounting firms, and auditors have in some cases become adept at manipulating these documents to obscure unfavourable financial data, making it harder for authorities and competitors to scrutinise their true financial positions. Financial crime, in particular, has become more difficult to detect as falsifiers find new approaches to present a skewed view of their financial performance and stability. An example is the creation of fabricated annual reports or similar regulatory documents using generic templates. Some falsifiers have even submitted identical documents for multiple entities, taking advantage of diminished regulatory requirements to commit financial fraud more easily.

### Summary

Despite these risks of falsification of regulatory documents, there is currently no established automated process or method for systematically detecting financial irregularities or fraud in these types of documents. The existing reliance on manual data entry in low-cost regions remains slow, prone to errors, and easily exploited. OCR-based technologies have shown promising results but have so far fallen short of reliably extracting financial information from the diverse and complex layouts commonly found in regulatory documents. This lack of automation and the inherent variability in document formats have allowed fraudulent activities and financial discrepancies to persist undetected for extended periods.

Therefore, there is a potential for improvements in the field of identifying pattern deviations in regulatory documents compliant with financial regulations. There is thus a need to develop a method that can identify pattern deviations in regulatory documents and point out falsifications.

It is an object of the present disclosure to mitigate, alleviate or eliminate the above-identified deficiencies and disadvantages in the prior art and solve at least the above-mentioned problem.

According to a first aspect of the disclosed invention there is provided a computer-implemented method for identifying pattern deviations in regulatory documents compliant with financial regulations. The method starts with receiving at least one regulatory document to a computer configured to receive regulatory documents compliant with financial regulations. Thereafter the method continues with analysing the at least one regulatory document using an analysis process, where the process is configured to group the information received from the regulatory document into content types depending on their appearance. The grouped information is then sorted into different categories depending on their content type. The method continues with generating a specific regulatory document material which is stored in a format that maintain the previously determined categories. In the next step the method retrieves a corresponding predefined general regulatory document material on a format containing the corresponding categories as the specific regulatory document material previously stored. The regulatory document material and the predefined regulatory document material are then compared using a pattern analysis comprising algorithms configured to detect deviations between the regulatory document material and the predefined regulatory document material. The result from the comparison is extracted as deviations of the regulatory document material compared to the predefined regulatory document material, wherein the extracted deviations indicate a probability of falsification of the regulatory document.

The method for identifying pattern deviations in regulatory documents compliant with financial regulations is configured to improve the detection of irregularities or anomalies within such documents. By doing so it can indicate falsification and other compliance issues, such as missing sections, incorrect or incomplete data, outdated regulatory references, improper use of terminology or failure to meet specific formatting requirements, to mention a few examples.

The method starts by receiving at least one regulatory document through a computer specifically configured to handle documents compliant with financial regulations. These regulations could be annual reports, quarterly reports and financial disclosures, but is not limited to these. The reports can be manipulated due to their complexity, their large volume of data, and reliance on subjective accounting methods. Small changes in revenue recognition, expenses or financial assumptions can be hidden within the details which makes it difficult to detect inaccuracies without thorough examination. The regulatory documents could also concern documents for laws and guidelines governing financial activities such as banking, insurance, securities trading, or auditing. All these types of documents are vulnerable to falsification or corruption. Due to their importance in verifying financial compliance, academic integrity, and regulatory adherence, any alteration or tampering could lead to significant legal, financial, or reputational risks. As a result, they are ideal for the disclosed method of identifying pattern deviations.

The computer is responsible for managing the entire process, from receiving documents to analysing them. The method is configured to manage large volumes of data efficiently, which is vital when processing extensive financial documents. The regulatory documents can be received by the computer either through manual copying or scanning of physical documents, converting them into a digital format. Alternatively, the documents may be directly uploaded to the computer if they already exist in a digital form.

The analysis process performed by the computer starts by grouping the information received from the regulatory document into content types based on the appearance of the information. The appearance refers to the way different elements within the document are visually presented. For instance, the computer can evaluate whether the text consists of combined words, sentences, numbers, footnotes, titles, or amounts. These elements can vary significantly in terms of font size, style, or placement within the document, which provides important indications about its structure. Titles may appear in bold or larger fonts, while footnotes usually have a distinct format, and numbers or amounts are often presented in tables or charts. The appearance thus determines the type of content types in that manner.

After the information has been grouped into content types, the analysis process continues by sorting the grouped information into categories, depending on the content type. This categorisation allows the computer to organise the document effectively to be able to conduct a thorough analysis. The categories might include titles, footnotes, numerical data, and text, ensuring that each part of the document is systematically examined. By sorting and classifying the information in a structured manner, the method creates a regulatory document that maintains consistency across all sections and is easy to evaluate. This organisation allows for a more efficient and accurate comparison with predefined regulatory standards and help the computer to identify potential deviations or anomalies that could indicate compliance issues or irregularities.

The method further comprising generating a specific regulatory document material and storing it in a format that maintains the previously determined categories. The specific regulatory document material refers to the document being tested for compliance, which has been processed and prepared in the earlier steps of the method to ensure it is properly categorised and formatted for easy comparison. By maintaining the previously determined categories in the document's format, each part of the document is clearly defined which simplifies a comparison. The specific regulatory document is then stored in the computer memory or a database, or in a cloud, so that the information remains easily accessible and manageable throughout the further processing steps and also for future analysis.

The next step of the method is to retrieve corresponding and predefined general regulatory document material in the same format as the specific regulatory document material, and to compare them with each other. This predefined material consists of a large collection of prior documents, which could be both correct and incorrect. This creates a comprehensive base of how regulatory documents should be structured and what they should avoid as well as which have potential falsifications and not. This dataset serves as a standard for compliance, highlighting necessary sections, formatting, and common mistakes. The predefined documents are organised with the same structure and matching categories as the specific regulatory document which enables the computer to accurately compare each section. These predefined general documents would represent the typical structure and content of regulatory documents that comply with financial regulations, serving as a benchmark for detecting irregularities.

With a specific regulatory document identified for investigation, along with a set of corresponding, predefined general regulatory document materials, the computer can now perform a pattern analysis to identify any deviations. The pattern analysis is the core of the method and uses algorithms in the compare stage of the regulatory document material with the predefined reference material. The pattern analysis is configured to detect deviations, irregularities or changes in the document structure, content, or format which does not match the standard patterns established by the general regulatory documents. These deviations might indicate various issues, such as formatting errors, missing sections, or more importantly, potential falsification of the document, where content has been altered in ways that violate the original regulatory structure.

Finally, the method extracts deviations that are detected during the comparison process described. These deviations highlight the areas where the new regulatory document does not conform to the expected patterns set out in the predefined general documents. By doing so, the method flags documents with a higher likelihood of being falsified or non-compliant with financial regulations and provide to a robust tool for safeguard against fraud and regulatory breaches.

According to some embodiments of the disclosed method, the analysis process to group into content types comprising digitalising the at least one regulatory document into a digital two-dimensional representation based on the presented rows and columns into a grid layout. This structured format allows the computer to efficiently organise and process the document content where it is distinguished between for example text, numbers, and tables. By projecting the document into a grid, the computer can accurately identify rows, columns, and also decipher footnotes. The computer can also detect cell divisions by analysing the spacing between text and numbers, as well as the distance between rows in the two-dimensional layout. It can for example identify different sections by dividing the document into rectangles, which helps the computer to recognise structured data. The grid-based representation simplifies the detection of readability of the document and enhances the speed and accuracy of the analysis.

According to some embodiments the analysis process of sorting comprising sorting the at least one regulatory document based on the digital two-dimensional representation of the grid layout using sequence learning in document processing. The sequence learning is in this disclosed invention to be understood as use of computational techniques such as Optical Character Recognition (OCR) and/or Long Short-Term Memory (LSTM), to give two examples. These techniques enable the computer to read and interpret text from images or visual data. OCR is able to detect and convert visual representations of characters into a machine-readable text. When applied to a grid as previously describe, it identifies individual elements, such as letters or numbers, and translates them into text data. LSTM analyses the sequence of characters or data points and reads the grid. LSTM helps the computer to understand the relationships between characters or values, even when they are spread across rows and columns. This allows the computer to recognise patterns and ensure accuracy when dealing with complex layouts or distorted text. Both OCR and LSTM has a capacity to retain contextual information over a sequence and work effectively to read and interpret grid-based data.

According to some embodiments the analysis process is executed by means of image processing of the regulatory document. The analysis process of a regulatory document is then enhanced through advanced image processing techniques. Image processing can correct common imperfections in scanned documents, such as skewed text, punch holes, and various artifacts like paper irregularities or dirt from the copier. These corrections are important to confirm the document is accurately interpreted for further analysis. A recurrent error like these can indicate on a potential falsification of the document.

There are many different image processing techniques that are usable for the method disclosed in this invention. One of these techniques is greyscaling which converts the regulatory document to shades of grey and then removing unnecessary colour information and making it easier to focus on the text or key content. Another technique is Gaussian blur, which smooths the image by reducing noise and softening small imperfections which allows for clearer detection of essential features. Canny edge detection is another image process that identifies the edges of objects in the image, such as text or structural elements, making it easier to process the document accurately. Thresholding is used to simplify the image by converting it into a binary format, separating the text from the background and making it clearer. Morphing dilate transformation is applied to enhance and strengthen important parts of the image, such as text or shapes, by expanding and refining the key areas for better recognition and analysis. All these techniques can be used in the image processing and work together in to ensure that scanned regulatory documents are free of distortions and other visual artifacts, allowing for more precise and efficient analysis. It can also be used to identify patterns in the occurrence or frequent appearance of visual artifacts in specific areas of documents, which may suggest potential falsifications.

According to some embodiments the analysis process is further configured to associate footnotes with their corresponding amounts in a regulatory document, and further configurated to link a certain amount in the regulatory document with the corresponding amount in the footnote within the same regulatory document. This means there is created a direct link between the text and its relevant footnote. This capability brings advantages in complex documents where footnotes provide crucial details or clarifications about the amounts presented in the main text. By automatically linking these elements it allows the computer to access the necessary context of the document, ensuring a more complete understanding of the data. This improves the accuracy of the analysis and makes the review process more efficient as it is no longer needed to manually search for related footnotes throughout the document. The automatic association ensures that the explanatory information is accessible alongside the numerical data which leads to a reduced potential for errors.

One aspect of the analysis process, particularly during the grouping and sorting steps, is the capability to automatically associate footnotes with their corresponding sections and amounts within the regulatory document material. This means an amount in the main text is directly linked to the related information provided in the footnote. This association is achieved by configuring the analysis process to identify and process multiple distinct types of footnotes. For example, the process can identify marker-based footnotes, by applying sequence learning techniques (like OCR and LSTM) to the grid layout to find both the amount and its adjacent marker. The process then searches a designated "footnote region" of the grid for the corresponding marker. In other embodiments, the process identifies textual reference footnotes (e.g., "see Note 14") by semantically parsing the text to find the target reference. It can also identify contextual footnotes (e.g., "Amounts in thousands") by using the grid layout to geometrically associate text at the bottom of a table with the table block itself.

By establishing these connections, the computer can more easily navigate complex documents and, crucially, perform advanced validation. The method may be configured to specifically link a certain amount in the document with a corresponding amount in the footnote. A linked footnote association makes sure that all relevant information is connected and accessible, enhancing the accuracy and reliability of the deviation detection method.

In some embodiments, the pattern analysis is configured to detect deviations in the regulatory document material by comparing the observed structure, content, and formatting against predefined criteria and standards for consistency and accuracy. The regulatory document material is the document which is being tested for compliances in the method. Here one aspect of the pattern analysis involves examining the layout and alignment of rows and columns to verify that information is properly organised and readable. The terminology, used in for example financial summaries, is also analysed to ensure it aligns with standards in the field. Inconsistent or incorrect terminology could indicate a false in the regulatory document. Font types and sizes are examined to confirm uniformity throughout the document, as inconsistencies may indicate potential falsifications. Variations in formatting can signal deliberate modifications, which might undermine the document's authenticity and professionalism. Additionally, structural elements such as headings and tables are analysed to ensure they adhere to the expected format. Any irregularities in these elements may suggest attempts to manipulate or obscure key information. Another feature of the pattern analysis is the detection of calculation errors, where incorrect amounts or miscalculations may not only reflect human error but could also be a sign of intentional manipulation in financial reporting. Automatically identifying such discrepancies strengthens the ability to detect fraud or falsifications within the document. By comparing these discussed features like fonts, structure, calculations and liabilities, against predefined standards, the analysis process is able to detect signs of falsification. The findings can then be highlighted to make sure that the document is not only accurate and compliant but also free from manipulation or fraud.

According to some embodiments, the predefined regulatory document material has been established using a machine learning system trained on a substantial number of regulatory documents comprising a set of standardised components typically utilised in regulatory documents that adhere to financial regulations, and wherein the machine learning system is configured to detect deviations in formatting, terminology, and structural elements of the document material.

The machine learning system is built on a vast database of previously submitted regulatory documents ensuring that it has been exposed to a large variety of formats, structures, and content commonly used in financial reporting. By training on as many documents as possible, the system becomes adept at recognising the standard components that typically appear in regulatory documents, including specific formatting, terminology, and structural elements that align with financial regulations. The advantage of this approach lies in the ability to detect deviations from the established norms from the previous learned documents. When analysing a new document, the machine learning system can quickly identify inconsistencies in one or several key areas, such as column alignment, font inconsistencies, variations in financial terminology, anomalies in the structure of financial tables and deviations in reported amounts. Any deviation from the standard templates or formats can signal manipulation or fraudulent activity. The machine learning system also has the capacity to identify occurrences of predetermined words or phrases. These might indicate the use of underlying economic benefits or highlight areas that require further analysis. This checklist of learned words or phrases acts as another layer of verification which further enhancing the system's ability to uncover hidden irregularities. The system can also recognise regulatory documents created from the same template. This recognition may ensure that documents remain consistent in both structure and content. It can also indicate that there are systematic falsifications or other errors. By continuing its extensive training, the machine learning system is able to efficiently and accurately detect anomalies that might be overlooked during manual inspection. It can pinpoint areas where the content doesn't align with expected structures or terminology. This is often an indication of a red flag for document tampering or attempts to mislead. The advanced capacity for detecting irregularities leads to faster, more reliable identification of potential falsifications which significantly contributes to the security and trustworthiness of the regulatory review process.

In some embodiments the machine learning system comprises a variation detection algorithm which identifies deviations, such as irregular sentence structures, misaligned columns and/or unexpected occurrences of specific words or phrases. By identifying irregular sentence structures, the algorithm can spot inconsistencies that might result from tampering or non-compliance with regulatory standards. Misaligned columns, particularly in financial documents, can disrupt the clarity and accuracy of the data presented, and detecting these misalignments ensures the integrity of the information. Also, the algorithm capacity to detect unexpected words or phrases helps uncover unusual or out-of-place terminology that could signal attempts to obscure critical details or mislead the reader.

In some embodiments, deviations that exceed a predetermined tolerance of irregularity in a specific regulatory document material are identified whereby the specific document is extracted.

The tolerance level can be adjusted to control the size or number of discrepancies that are permitted before triggering an alert. A higher tolerance allows for larger or more numerous deviations within a document before it is flagged, focusing on significant irregularities while preventing too much information from being generated about minor issues. This approach ensures that only documents with major concerns are extracted for further analysis. Contrariwise a lower tolerance setting makes the system more sensitive, identifying even smaller discrepancies or fewer instances of irregularity. This allows for the detection of subtle issues that might otherwise go unnoticed but may still indicate potential falsifications. The adjustable tolerance offers flexibility, enabling the system to balance between capturing major issues or flagging even minor discrepancies based on the specific needs of the analysis.

In some embodiments of the disclosed method, the specific regulatory document material is stored in a memory or database for subsequent automated auditing and/or analysis. By storing the document material, it ensures that continuous or retrospective analysis without the need to repeatedly reprocess the original document. The storage of regulatory documents in a database also allows for the integration of advanced analytical tools. Automated auditing can be performed at any point, comparing stored data against new regulations or standards. Historical data can be easily retrieved for pattern analysis to detect trends or irregularities that may not be immediately apparent in a single document review. In other embodiments, the identified divisions are stored in a memory or database for subsequent automated auditing and/or analysis. Which is similar to the specific regulatory document material already described. This allows both the divisions and the document itself to be accessible for subsequent automated auditing or analysis. By storing these elements together, the system can efficiently track and audit both the structure and content of the document.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows the steps of the computer-implemented method for identifying pattern deviations in regulatory documents according to an embodiment of the present disclosure.
Figure 2 illustrates in a graphical series of figures the steps of the computer-implemented method for identifying pattern deviations in regulatory documents according to an embodiment of the present disclosure.
Figure 3 shows the steps of the computer-implemented method for identifying pattern deviations in regulatory documents according to an embodiment of the present disclosure.
Figure 4 shows the group step s1021 within the analysing step s102 according to an embodiment of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

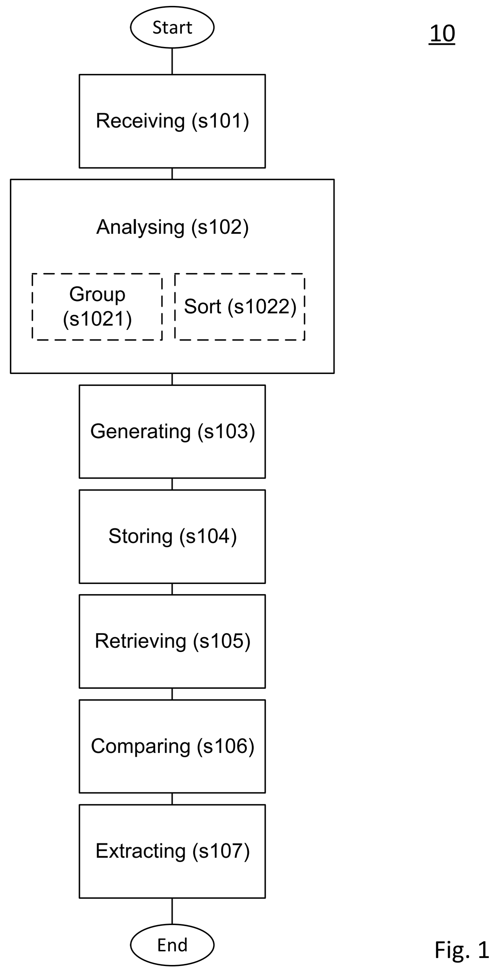

Figure 1 illustrates the steps of a computer-implemented method configured to identify pattern deviations in regulatory documents 100, particularly those compliant with financial regulations. The method 10 operates through a series of defined steps which can be seen in figure 1, from receiving s101 of the regulatory document 100 and culminating in extracting s107 where deviations are detected. Each step in the method 10 plays a role in processing and comparing the regulatory document 100 against established standards, allowing the identification of inconsistencies that could indicate potential falsifications.

The method 10 starts with receiving s101 at least one regulatory document 100 into the computer 200. The computer 200 is configured to manage regulatory documents 100 compliant with financial regulations, but it is not limited to these. The computer 200 can handle various types of regulatory documents. Another example is that it can manage cybersecurity compliance reports from basic security summaries to detailed vulnerability. This receiving step s101 involves digitising a physical document or directly accepting digital submissions, thereby permitting the computer 200 to work with a standardised electronic version of the document. The receiving step s101 may involve optical character recognition (OCR) to convert scanned documents into a readable text-based format. Where documents are provided in existing digital formats, such as PDFs or XML files, OCR can be bypassed to directly utilise these digital forms.

After the receiving step s101, the method progresses to the analysing step s102, which is executed by the analysis process 201 shown in figure 1. The analysis process 201 comprises two sub-steps, group s1021 and sort s1022. During the grouping s1021, the analysis process 201 groups information received from the regulatory document 100 based on its appearance, categorising sections such as headings, footnotes, tables, and paragraphs. This grouping s1021 organises the document's structure, establishing a foundation for subsequent sorting.

Automatically associating footnotes with their corresponding sections and amounts within the regulatory document material 101 means that each amount mentioned in the main text is directly linked to the related information provided in the footnote. By establishing these connections, the computer more easily navigates through complex regulatory documents and understand the context of each amount or detail referenced. Regulatory documents often contain dense and intricate information, where footnotes provide essential clarifications or calculations. The clear association helps prevent errors or inconsistencies from being overlooked and makes it easier to identify potential falsifications. By maintaining a link, the method enhances clarity and accuracy, ensuring that all relevant information is connected and accessible.

The challenge of associating and linking footnotes is complicated due to the wide variety of formats and types used in regulatory documents. For instance, footnotes are not a single, uniform entity. The analysis process is advantageously configured to identify and process multiple distinct types of footnotes.

In some embodiments, the analysis process identifies marker-based footnotes. These are a common type where a numerical amount or text segment in the main body, example a table, is followed by a specific marker, such as a superscript number (e.g., 1,000,000¹), a symbol (e.g., 1,000,000*), or a bracketed letter (e.g., 1,000,000(a)). The analysis process 201 may then be configured to locate a corresponding marker in a designated footnote region, which may be at the bottom of the page, the end of the table, or in a separate note section.

In other embodiments, the analysis process identifies textual reference footnotes. These might not use a symbol but rather a textual instruction, such as "see Note 14" or "refer to "Long-Term Debt on page xx". The analysis process in this case is configured to semantically parse this instruction, identify the target reference ("Note 14"), and locate the corresponding section heading or page number within the document.

In other embodiments, the analysis process identifies contextual or table-specific footnotes. These notes may appear at the bottom of a table without any specific marker in the table itself. They are implicitly linked to the entire table or specific rows/columns (e.g., "Amounts in SEK"). The analysis process can then use the digital two-dimensional representation and grid layout to first identify the geometric boundaries of the table and then identify text blocks positioned within a predefined proximity (e.g., immediately below the table boundary) as being contextually associated with that table.

The analysis process may execute a multi-step procedure. First, during the grouping and sorting steps, the process uses the grid layout to segment the document into logical blocks, such as "main text"," table blocks", and "footnote regions". This segmentation could be used for limiting the search space for corresponding notes. Second, the analysis process applies sequence learning techniques, such as OCR and/or LSTM, to the identified blocks. When processing a "table block", for example, the sequence learning model is specifically trained to identify not just the numerical amounts, but also any adjacent, non-numerical markers (e.g., superscripts, symbols) that are often missed by standard OCR. The system logs the numerical amount (e.g., "1,000,000") and its associated marker (e.g., "¹") as a linked pair.

In the next step, the analysis process searches the corresponding 'footnote region' for the identical marker (e.g., "¹"). Upon locating it, it defines a "footnote text block", the text following the marker up to the next marker or a significant layout break (like a new line or column change). In this way the system creates a persistent association between the source amount's location and the footnote text block's location. Thereafter, to fulfil the specific step of linking a certain amount in the regulatory document with the corresponding amount in the footnote, the analysis process could perform a second-pass analysis on the footnote text block itself. It again uses sequence learning to parse the footnote text and extract any numerical values or amounts within that text. For example, the main text may say "Assets: 500,000¹". The associated footnote text "¹ Includes 300,000 of goodwill and 200,000 of patents" is then parsed. The system extracts "300,000" and "200,000" and stores a direct link between the parent amount ('500,000') and its constituent amounts ("300,000", "200,000").

This system is not limited to checking for missing footnotes. It can perform automated calculation validation. In the example above, the system can automatically sum the linked footnote amounts (300,000 + 200,000) and validate this sum against the parent amount (500,000). A mismatch is a strong deviation and a high-probability indicator of falsification, which can be flagged in the extracting step.

This type of linking mechanism allows for detection of contextual anomalies. The pattern analysis can compare a deviation in the main document (e.g. "a 200% increase in...") against the text of its linked footnote. The machine learning system, using its variation detection algorithm, can be configured to search the footnote text for expected explanatory phrases like "acquisition", "revaluation", "merger", "impairment" etc. If a significant deviation is detected in an amount, and its linked footnote lacks an explanatory keyword the probability of falsification can be flagged. This cross-validation is difficult without the automated association and linking of amounts as disclosed.

In the group step s1021, digital two-dimensional representations 102 are generated based on the document's rows and columns, forming a grid layout 103. This digital layout allows the analysis process 201 to further classify content.

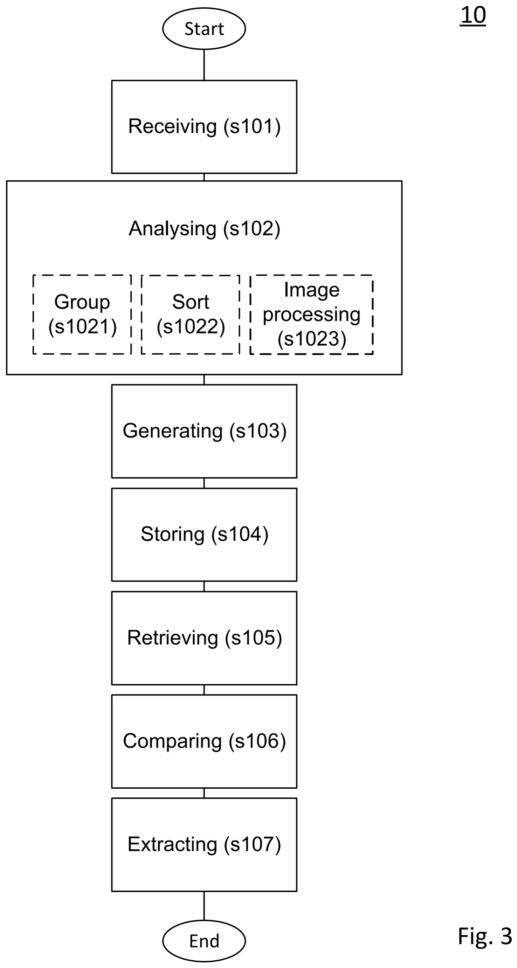

In some embodiments the analysis process 201 may include image processing s1023 techniques, shown in figure 3. These techniques use algorithms to detect grid structures or visual patterns in regulatory documents 100. These techniques enhance the analysis by correcting common imperfections found in scanned documents, such as skewed text, punch holes, paper irregularities, or dirt marks. Such corrections are essential to ensure accurate interpretation, as recurring errors in these areas could indicate potential falsification. The image processing s1023 applies several techniques to achieve this. Greyscaling converts the document to shades of grey, removing unnecessary colour information and highlighting the key content. Gaussian blur smooths the image, reducing noise and minor imperfections, which allows clearer detection of features. Canny edge detection identifies the edges of objects, such as text or structural elements, facilitating accurate processing. Thresholding simplifies the image by converting it to a binary format, separating text from the background for clarity. Morphing dilate transformation strengthens important parts of the image, enhancing the recognition of text or shapes. These techniques can be utilised together to remove distortions and visual artifacts to improving the analyse precision. In addition, alternatives to image processing s1023, such as layout analysis algorithms, can utilise embedded metadata or markup in digital formats to detect and organise document content without extensive visual corrections. The combination of methods not only improves document clarity but also identifies patterns in visual artifacts that may suggest deliberate alterations, enhancing the system's ability to detect potential falsifications.

Furthermore, the sorting step s1022 within the analysis process 201, figure 1-3, is performed using content-based criteria to categorise the grouped information from the group step s1021. This involves sorting information into categories such as financial statements, legal terms, compliance notes, and footnotes. The analysis process 201 uses sequence learning techniques in document processing. The sequence learning is to be understood as the use of computational techniques such as Optical Character Recognition (OCR) and/or Long Short-Term Memory (LSTM), to give two examples, but are not limited to these two examples. OCR detects and converts visual representations of text into machine-readable format, identifying elements like letters and numbers in grid structures. LSTM, in turn, analyses sequences, recognising relationships between characters or values across rows and columns. By retaining contextual information, these methods enable accurate interpretation of complex layouts and structured data. This approach ensures precise categorisation and analysis of regulatory documents.

Following the analysing step s102, the method shown in figure 1 advances to the generating step s103. The generating step makes sure the computer 20 generates a specific regulatory document material 101. The specific regulatory document material 101 is the document that is to be tested and has at this point been processed and prepared in the earlier steps, step s101-s102, to ensure it is categorised and formatted for easy comparison.

After generating specific regulatory document material 101, the method 10 moves to the storing step s104. In this step, the generated regulatory document material 101 is stored in a format that maintains the previously determined categories from the analysis step s102. The storing could be made in a memory or database. Storing step s104 ensures that each document element remains organised, facilitating retrieval and comparison. The stored format may be JSON, XML, or database tables, depending on accessibility and flexibility requirements, but are not limited to these formats. Cloud storage solutions could also be employed, offering scalability and remote access.

The method illustrated in figure 1 proceeds further into a retrieving step s105. This step involves retrieving corresponding predefined general regulatory document material 300 on a format containing the corresponding categories as the specific regulatory document material 101 previously stored. The predefined general document material 300 consists of a large collection of prior regulatory documents 100. The documents 300 include both correct and incorrect regulatory documents to creating a comprehensive reference base. This set with corresponding predefined general regulatory document material 300 serves as a benchmark for compliance, representing how regulatory documents should be structured, formatted, and where potential errors or falsifications may occur. The predefined documents are organised with matching categories to the specific regulatory document 101. This enables a precise comparison of each section between the predefined general regulatory document material 300 and the specific regulatory document 101. These documents reflect the typical structure and content of regulatory documents compliant with financial regulations, providing a standard against which the specific document is compared to identify any irregularities or deviations. However, the method is versatile and not limited to financial regulations. It can be applied across various industries, such as healthcare, environmental, schools and universities and technical sectors.

The retrieving step s105 shown in could also incorporate a machine learning system 400 that interacts with predefined regulatory document material 300 to automate the standardisation and compliance verification of financial regulatory documents. The predefined regulatory document material 300 includes templates, formatting styles, terminology, and document structures that a machine learning system 400 can retrieve and identify. By training on this predefined regulatory document material 300, the machine learning system 400 can develop the ability to recognise expected layouts, terminology, and structural patterns, allowing it to detect deviations from these norms with accuracy and efficiency. For instance, during the retrieval process, the machine learning system 400 can be configured to detect inconsistencies in column alignment, ensuring data is properly aligned for readability and consistency. The machine learning system 400 is also capable of identifying font inconsistencies and variations in specialised financial terminology. Additionally, it can retrieve and assess the structure of financial tables, identifying any structural anomalies that could lead to potential data misrepresentation. The machine learning system 400 can also examine summary sections to retrieve any deviations that might compromise the clarity or intended message of the document. The retrieval functionality of the machine learning system 400 is supported by a variation detection algorithm 401. These algorithms 401 enables the machine learning system 400 to retrieve and detect specific predetermined words or phrases that could indicate underlying economic benefits or key financial concepts that are relevant for regulatory compliance. Backed by a machine-learned checklist of keywords and phrases, the variation detection algorithm 401 can pinpoint language patterns that carry particular compliance significance, reinforcing terminology consistency across the document.

Once the predefined general regulatory document material 300 has been retrieved, the comparing step s106 is executed by the pattern analysis 204. The pattern analysis 204 is configured to detect deviations between the specific regulatory document material 101 and the predefined general regulatory document material 300. It focuses on aspects such as structure, content, and formatting, ensuring consistency against predefined standards.

When identifying differences, the method 10 reaches the final step of extracting s107. In extracting s107, the deviations detected by the pattern analysis 202 are isolated, highlighting areas of inconsistency. These deviations are categorised according to their potential significance or likelihood of indicating falsification. Deviations flagged in extracting s107 could include irregular sentence structures, misaligned columns, unexpected word choices, or unexplained changes in numerical data or amounts that does not equal the correct amounts. The extracted deviations are then either stored separately for additional analysis or presented to compliance experts via for example a review dashboard. This storing could be performed in a memory or a database for subsequent automated auditing and/or analysis.

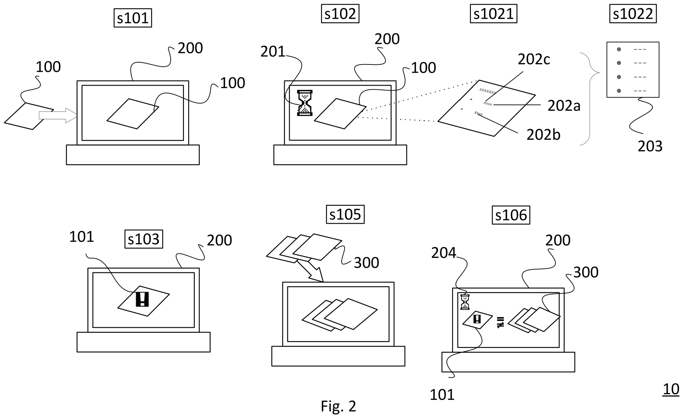

Figure 2 illustrates in a graphical series of figures how the computer-implemented method 10 is configured. The figure shows how the identifying of pattern deviations in regulatory documents 100 operates in a sequence of structured steps step 101-107. In the initial receiving stag s101, a regulatory document 100 is received by a computer 200, marking the first interaction within the process. The computer 200 initiates an analysing process 201 in the analysis step s102 to examine the regulatory document 100 in detail. This analysis process is first configured to group s2021 the received information into different content types 202a, 202b, 202c, based on their appearance. This grouping is accomplished through an internal operation, step S2021, which classifies each segment of information according to its visual and structural characteristics. Once grouped, the information is then sorted into specific categories 203, according to their respective content types. This sorting step, s1022, ensures that the information is systematically categorised, facilitating a structured analysis for the subsequent steps. The method then proceeds to a generating step s103 where a specific regulatory document material 101 is created, see figure 2. This generated document material 101 forms the foundation for further comparisons. The method 10 includes a step for storing s104, in which the regulatory document material 101 is saved in a format that preserves the predefined categories 203. Although not explicitly shown in Figure 2, this storage step is considered implicit due to its straightforward nature and importance in maintaining the organised structure established in the prior steps. Following storage, the method involves retrieving s105 the regulatory document material 101 alongside a predefined regulatory document material 300. This action sets up the method for the comparative analysis that follows. In the comparing step s106 the method 10 performs a pattern analysis 204. Here the method compares the regulatory document material 101 with the predefined regulatory document material 300. The pattern analysis 204 employs specific algorithms designed to detect any deviations between the two materials, identifying irregularities that may indicate non-compliance or errors in the document structure or content. Finally, the method 10 concludes with an extraction step s107. In this step any detected deviations between the regulatory document material 101 and the predefined regulatory document material 300 are systematically identified and isolated. This final extraction step completes the method's function, allowing the deviations to be further reviewed, addressed, or utilised to enhance compliance and document accuracy.

In Figure 3, the analysing step s102 is expanded to include an image processing step s1023, which could enhance the precision of the document analysis by addressing visual imperfections that may hinder accurate interpretation. The image processing step s1023 corrects common scanning artifacts that may appear in regulatory documents, such as skewed text, punch holes, and dirt or irregularities from copying processes. By applying these corrections, any recurrent visual errors are detected, which may indicate potential falsifications, thereby reinforcing the document's integrity before further analysis. The image processing step s1023 incorporates several advanced techniques to achieve these results. For instance, greyscaling removes unnecessary colour data, converting the document to shades of grey to focus on essential content. Gaussian blur is used to smooth the image, reducing minor imperfections and background noise, which enhances the clarity of essential features. Canny edge detection identifies edges within the document, isolating text and structural elements that aid in accurate processing. Thresholding further simplifies the image by converting it to a binary format, separating the text from the background to improve readability. Morphing dilate transformation strengthens significant areas of the image, highlighting key text or shapes for better recognition and analysis. Together, these techniques enable the method 10 to remove distortions and visual artifacts from scanned regulatory documents, resulting in a clearer and standardised image for subsequent analysis.

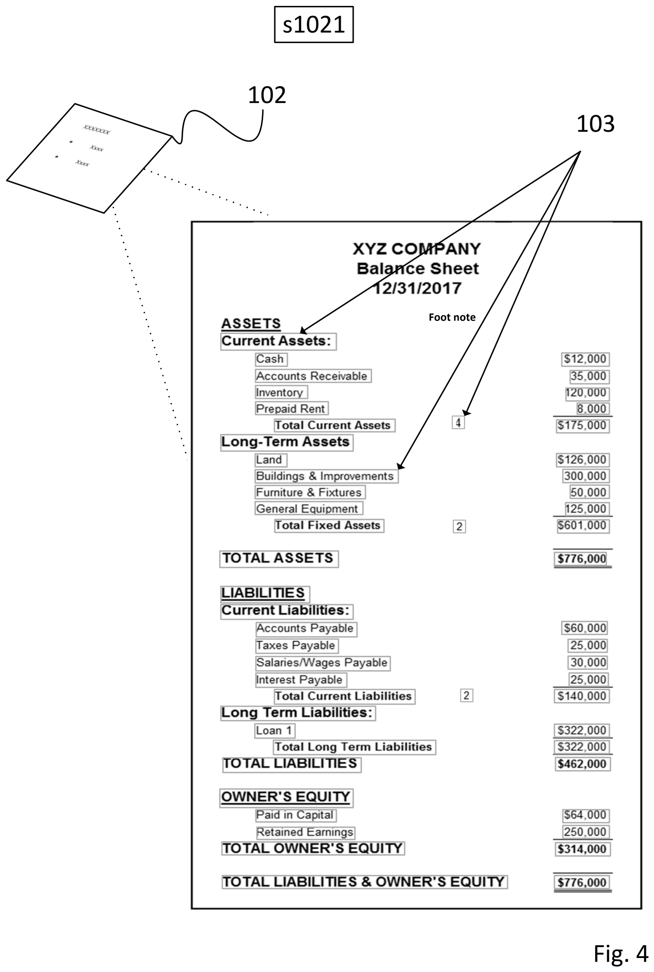

Figure 4 illustrates the group step s1021 within the analysing step s102. In this figure 4 it leverages the digital two-dimensional representation 102 of the grid layout 103 to efficiently organise information within the regulatory document 100. In this embodiment, the digital two-dimensional representation 102 provides a structured grid layout 103 which is segmenting the document's content into recognisable blocks. This layout simplifies the grouping process by visually delineating sections, such as headings, paragraphs, tables, and footnotes, making it easier for the system to categorize and link relevant parts of the document. By arranging content into a digital grid layout 103, the group step s1021 prepares the systematically interpret relationships between various document components for later in the method 10. This structure enables the system to automatically associate footnotes with their corresponding main text sections, for example, or link financial figures with their explanatory notes, which are commonly dispersed across regulatory documents. As a result, the two-dimensional representation 102 allows the group step s1021 to gather related information efficiently and accurately, ensuring that the document's logical structure is retained and readily accessible for further analysis. This organisation could be beneficial when the method is employed with image processing techniques s1023, as the two-dimensional representation 102 allows for both visual and structural grouping of content, which makes it easier that each document element is appropriately positioned within the analysis process 201.

The person skilled in the art realises that the present disclosure is not limited to the preferred embodiments described above. The person skilled in the art further realises that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A computer-implemented method for identifying pattern deviations in regulatory documents (100) compliant with financial regulations, the method (10) comprising:
- receiving (s101) at least one regulatory document (100) to a computer (200) configured to receive regulatory documents (100) compliant with financial regulations;
- analysing (s102) the at least one regulatory document (100) using an analysis process (201) configured to group (s1021) the information received from the regulatory document (100) into content types (202a, 202b, 202c) depending on their appearance, and to sort (s1022) the grouped information received from the regulatory document (100) into categories (203) depending on their content type (202);
- generating (s103) a specific regulatory document material (101);
- storing (s104) the specific regulatory document material (101) in a format which maintains the previously determined categories;
- retrieving (s105) corresponding predefined general regulatory document material (300) on a format containing the corresponding categories as the specific regulatory document material (101) previously stored;
- comparing (s106) the regulatory document material (101) with the predefined regulatory document material (300) using a pattern analysis (204) comprising algorithms configured to detect deviations between the regulatory document material (101) and the predefined regulatory document material (300);
- extracting (s107) deviations of the regulatory document material (101) compared to the predefined regulatory document material (300);
wherein the extracted deviations indicate a probability of falsification of the regulatory document (100).

2. The computer-implemented method according to claim 1,
the analysis process (201) to group (s1021) into content types comprising digitalising the at least one regulatory document (100) into a digital two-dimensional representation (102) based on the presented rows and columns into a grid layout (103).

3. The computer-implemented method according to claim 2,
wherein the analysis process (201) of sorting (s1022) comprising sorting the at least one regulatory document (100) based on the digital two-dimensional representation (102) of the grid layout (103), using sequence learning in document processing.

4. The computer-implemented method according to any of the preceding claims,
wherein the analysis process is executed by means of image processing (s1023) of the at least one regulatory document (100).

5. The computer-implemented method according to any of the preceding claims,
wherein the analysis process is configured to associate footnotes with their corresponding amounts in the regulatory document (101) and further configured to link a certain amount in the regulatory document with the corresponding amount in the footnote within the same regulatory document.

6. The computer-implemented method according to any of the preceding claims,
wherein the pattern analysis (202) is configured to detect deviations in the regulatory document material (101) by comparing the observed structure, content, and formatting against predefined criteria and standards for consistency and accuracy.

7. The computer-implemented method according to any of the preceding claims,
wherein the predefined regulatory document material (300) has been established using a machine learning system (400) trained on a substantial number of regulatory documents comprising a set of standardised components typically utilised in regulatory documents that adhere to financial regulations, and
wherein the machine learning system (400) is configured to detect deviations in formatting, terminology, and structural elements of the document material.

8. The computer-implemented method according to claim 7,
wherein the machine learning system (400) comprises a variation detection algorithm (401) which identifies deviations, such as irregular sentence structures, misaligned columns and/or unexpected occurrences of specific words or phrases.

9. The computer-implemented method according to any of the preceding claims,
wherein deviations that exceed a predetermined tolerance of irregularity in a specific regulatory document material (101) are identified whereby the specific document is extracted.

10. The computer-implemented method according to any of the preceding claims,
wherein the specific regulatory document material (101) is stored in a memory or database for subsequent automated auditing and/or analysis.

11. The computer-implemented method according to any of the preceding claims,
wherein the identified divisions are stored in a memory or a database for subsequent automated auditing and/or analysis.
